(19) Europäisches Patentamt
European Patent Office
Office européen des brevets

(11) EP 3 036 845 B1

(12) **EUROPÄISCHE PATENTSCHRIFT**

(45) Veröffentlichungstag und Bekanntmachung des Hinweises auf die Patenterteilung:
**28.03.2018 Patentblatt 2018/13**

(21) Anmeldenummer: **14771762.3**

(22) Anmeldetag: **04.08.2014**

(51) Int Cl.:
*H04B 10/112* *(2013.01)*    *G01S 17/66* *(2006.01)*

(86) Internationale Anmeldenummer:
**PCT/DE2014/000397**

(87) Internationale Veröffentlichungsnummer:
**WO 2015/024546 (26.02.2015 Gazette 2015/08)**

(54) **WIRKSYSTEM ZUR ERFASSUNG EINES ZIELOBJEKTES**

ACTIVE SYSTEM FOR SENSING A TARGET OBJECT

SYSTÈME ACTIF DE DÉTECTION D'UNE CIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2013 DE 102013014045**

(43) Veröffentlichungstag der Anmeldung:
**29.06.2016 Patentblatt 2016/26**

(73) Patentinhaber: **MBDA Deutschland GmbH 86529 Schrobenhausen (DE)**

(72) Erfinder:
• **GEIDEK, Frank**
**86561 Aresing (DE)**
• **BRÄNDLE, Markus**
**85290 Geisenfeld (DE)**
• **FALL, Michael**
**86650 Wemding (DE)**
• **ZOZ, Jürgen**
**86316 Friedberg (DE)**

(74) Vertreter: **Isarpatent**
**Patent- und Rechtsanwälte Behnisch Barth Charles**
**Hassa Peckmann & Partner mbB**
**Friedrichstrasse 31**
**80801 München (DE)**

(56) Entgegenhaltungen:
**GB-A- 2 252 398    US-A1- 2002 080 455**
**US-A1- 2005 069 325**

**Beschreibung**

Die vorliegende Erfindung betrifft ein Wirksystem, das insbesondere zur Erfassung und Verfolgung von Zielobjekten verwendbar ist.

Um auf ein Zielobjekt einwirken zu können, ist es notwendig, das Zielobjekt präzise erfassen und verfolgen zu können. Hierzu sind im Stand der Technik beispielsweise optische Zielerfassungssysteme bekannt, die über hochpräzise, mechatronische Stellsysteme auf das Ziel ausgerichtet und auf diesem gehalten werden. Erst dann kann auf das Ziel gewirkt werden. Beträgt die Richtgenauigkeit, die erzielt werden muss um ein Ziel zu bekämpfen wenige Microrad, z.B. beim Ausrichten eines Laserstrahls auf das Ziel, so tritt gerade bei sich schnell bewegenden Objekten bzw. bei Objekten, die hochagil ihre Flugbahn ändern können, oftmals das Problem auf, dass die erforderliche Genauigkeit mit einem einzigen Stellsystem nicht erzielbar ist oder aber nur mit erheblichem Aufwand realisiert werden kann. Dies gilt insbesondere dann, wenn mit dem Stellsystem zusätzlich ein möglichst großer Winkelbereich abgedeckt werden soll. Aus der Literatur sind verschiedene Beispiele bekannt, bei denen die vom Gesamtsystem zu erzielende Genauigkeit über kaskadierte Stellsystemebenen mit steigender Genauigkeit erreicht wird (DE 4122623 A1, US7171126 B2).

GB2252398 A beschreibt eine Vorrichtung um auf ein bewegliches Ziel einen ersten Punkt zur Markierung des Targets mit der Energie eines Laserstrahls zu richten. US020050069325 A1 beschreibt einen optischen Kopf für ein optisches Kommunikationssystem.US020020080455 A1 beschreibt eine Gebäude -zu-Gebäude über die Luft Übertragung von optischen Daten. Die Herausforderung beim Betrieb dieses kaskadierten Gesamtsystems liegt darin, die im System vorhandenen Sensorinformationen so zu kombinieren, dass das Ziel immer mit höchster Genauigkeit verfolgt werden kann,

Es ist daher Aufgabe der Erfindung ein Wirksystem anzugeben, das bei einfachem und kostengünstigem Aufbau und bei wartungsarmem Betrieb eine sichere und zuverlässige Erfassung und/oder Verfolgung eines Zielobjekts ermöglicht.

Die Aufgabe wird gelöst durch die Merkmale des Hauptanspruchs. Daher wird die Aufgabe gelöst durch ein Wirksystem, das neben einer Sende-/Erfassungsvorrichtung zum Wirken gegen ein Zielobjekt ein erstes Regelsystem, ein zweites Regelsystem und ein drittes Regelsystem sowie bevorzugt zwei Sensorebenen zur Detektion der Zielbewegung umfasst. Das erste Regelsystem sowie die Sende-/Erfassungsvorrichtung kann insbesondere in mehrfacher Ausführung im Wirksystem eingesetzt werden. Die Sende-/Erfassungsvorrichtung umfasst eine Detektionsvorrichtung, um das Zielobjekt zu erfassen. Außerdem ist die Sende-/Erfassungsvorrichtung bevorzugt eingerichtet, einen Strahlengang zu dem Zielobjekt aufzubauen. Dies kann beispielsweise durch optische Strahlung, akustische Strahlung oder durch elektromagnetische Strahlung realisiert sein. Der Strahlengang erstreckt sich somit von der Sende-/Erfassungsvorrichtung zu dem Zielobjekt und muss daher stets an die Bewegungen des Zielobjekts angepasst werden. Dazu ist ein erstes Stellsystem vorhanden, das von dem ersten Regelsystem angesteuert ist, wobei das erste Stellsystem den Strahlengang ablenkt. Auf diese Weise stellt das erste Stellsystem den Strahlengang derart ein, dass sich dieser stets von der Sende-/Erfassungsvorrichtung zu dem Zielobjekt erstreckt, auch wenn sich das Zielobjekt bewegt. Ebenso ist ein zweites Stellsystem vorhanden, das von einem zweiten Regelsystem angesteuert ist. Auch das zweite Stellsystem lenkt den Strahlengang ab, so dass das erste Stellsystem und das zweite Stellsystem gemeinsam die Ausrichtung des Strahlengangs festlegen. Wie zuvor bereits beschrieben, ist der Strahlengang daher derart ausrichtbar, dass dieser sich von der Sende-/Erfassungsvorrichtung zu dem Zielobjekt erstreckt. Ein drittes Regelsystem dient schließlich zum Ansteuern eines dritten Stellsystems. Das dritte Stellsystem wirkt direkt auf die Sende-/Erfassungsvorrichtung ein und ist somit zum Ausrichten der gesamten Sende-/Erfassungsvorrichtung verwendbar. Durch die Kombination des ersten Regelsystems, des zweiten Regelsystems und des dritten Regelsystems werden dann sämtliche Bewegungen des Zielobjekts präzise verfolgt. Zur Zielverfolgung wird insbesondere über eine erste der zwei im Wirksystem integrierten Sensorebenen die Ablage des Gesamtsystems zum Ziel und über eine zweite Sensorebene die Ablage des dritten Stellsystems zum Ziel beobachtet.

Die Unteransprüche haben bevorzugte Weiterbildungen der Erfindung zum Inhalt.

Erfindungsgemäß sind in einer ersten Option das erste Regelsystem und das zweite Regelsystem gekoppelt ausgelegt. Dies bedeutet, dass die Regelschleife des zweiten Regelsystems durch Zusatzinformationen aus dem ersten Regelsystem geschlossen ist.

Erfindungsgemäß weist in dieser ersten Option das erste Stellsystem eine Nulllage auf, wobei das zweite Regelsystem eingerichtet ist, das erste Stellsystem in diese Nulllage zu überführen oder alternativ in dieser Nulllage zu halten. So entsteht die oben beschriebene Koppelung des ersten Regelsystems und des zweiten Regelsystems. Das Überführen in die Nulllage und/oder das Halten in der Nulllage geschieht bevorzugt mittels des zweiten Stellsystems. Auf diese Weise wird insbesondere der Stellbereich der Sende-/Erfassungsvorrichtung erhöht. Durch das zweite Stellsystem ist die Nulllage des ersten Stellsystems verschiebbar, so dass das erste Stellsystem in einem verschobenen Bereich agiert. Des Weiteren ist bevorzugt vorgesehen, dass das erste Stellsystem performanter ausgelegt ist als das zweite Stellsystem. So führt das erste Stellsystem den Strahlengang stets zum Zielobjekt, wobei auch schnelle Änderungen einer Bewegung des Zielobjekts verfolgt werden können. Jedoch geht die Performance mit einer geringen Auslenkbarkeit des ersten Stellsystems einher. Daher erweitert das zweite Stellsystem den Stellbereich der Sende-/Erfassungsvorrichtung, ohne jedoch die Performance des ersten Stellsystems negativ zu beeinflussen.

In einem möglichen Beispiel des Wirksystems ist das dritte Regelsystem unabhängig von dem ersten Regelsystem und dem zweiten Regelsystem aufgebaut.

Erfindungsgemäß wird in einer zweiten Option das dritte Regelsystem verwendet, um das zweite Regelsystem in seine Nulllage zu überführen oder in dieser Nulllage zu halten. In diesem Fall ist das dritte Regelsystem an das zweite Regelsystem gekoppelt.

Bevorzugt ist vorgesehen, dass die Sende-/Erfassungsvorrichtung eine optische Sende-/Erfassungsvorrichtung ist.

Die Sende-/Erfassungsvorrichtung weist vorteilhaft eine Einwirkvorrichtung auf.

Die Sende-/Erfassungsvorrichtung umfasst insbesondere eine Laserquelle und eine Kamera auf der Ebene des ersten Regelsystems, wobei bevorzugt auch eine mehrfache Ausführung mit mehreren in Einzelkanälen angeordneten Laserquellen und Kameras ist möglich ist. Die Laserquelle ist ausgelegt, einen Laserstrahl auf das Zielobjekt zu senden. Die Kamera ist ausgelegt, das Zielobjekt zu detektieren. Auf diese Weise wird die im vorigen Absatz genannte Funktionalität umgesetzt. Die Laserquelle ist insbesondere für den Einsatz als Einwirkvorrichtung geeignet, da ein Laserstrahl eine hohe Reichweite aufweist und somit auch weit entfernte Zielobjekte bestrahlt werden können.

In einer weiteren bevorzugten Ausführungsform des Wirksystems ist das erste Stellsystem ein Piezo-Aktor. Dieser ist sehr schnell auslenkbar. Daher weist das erste Stellsystem als Piezo-Aktor eine hohe Performance auf, womit auch sich schnell bewegende Zielobjekte erfasst und verfolgt werden können.

Ebenso ist bevorzugt vorgesehen, dass das zweite Stellsystem eine Schwingspuleneinheit ist, mit der über die Schwingspulen ein Kippspiegel in Tip-Tilt-Richtung bewegbar ist. Die Schwingspuleneinheit weist, verglichen mit dem zuvor genannten Piezo-Aktor, eine größere maximale Auslenkbarkeit auf, wobei die Performance geringer ist. Dadurch ist das zweite Stellsystem ideal zur Kopplung mit dem ersten Stellsystem geeignet, da dadurch von der Performance des ersten Stellsystems und gleichzeitig von der großen Auslenkbarkeit des zweiten Stellsystems profitiert wird.

Das dritte Stellsystem ist vorteilhafterweise ein Industrieroboter. Dieser weist, verglichen mit dem Piezo-Aktor und der Schwingspuleneinheit, die größte maximale Auslenkung und die geringste Performance auf. Durch Verwenden des Industrieroboters ist daher ein sehr großer Bereich vorhanden, in dem die Sende-/Erfassungsvorrichtung Zielobjekte erfassen und verfolgen kann. Die geringe Performance des Industrieroboters ist durch das erste Stellsystem und/oder das zweite Stellsystem ausgleichbar.

In einer weiteren vorteilhaften Ausführungsform des Wirksystems ist das erste Regelsystem derart eingerichtet, dass dieses das erste Stellsystem auf Basis der Daten der auf dieser Ebene angeordneten Erfassungsvorrichtung ansteuert. Dies bedeutet, dass die Erfassungsvorrichtung eine Abweichung des Zielobjekts gegenüber einem Referenzpunkt erkennt, wobei diese Abweichung durch das erste Regelsystem ausgeregelt wird. Somit wird durch das erste Regelsystem der Referenzpunkt wieder auf das Zielobjekt gelegt. Das erste Regelsystem erlaubt daher ebenfalls, den Referenzpunkt auf verschiedene Bereiche des Zielobjekts zu legen. So kann insbesondere eine Zündladung des Zielobjekts oder ein sonstiger relevanter Bereich des Zielobjekts direkt erfasst und verfolgt werden.

Das dritte Regelsystem umfasst bevorzugt eine Zusatz-Erfassungsvorrichtung. Damit ist das dritte Regelsystem nicht mit der ersten Erfassungsvorrichtung verbunden, sondern verfügt durch die Zusatz-Erfassungsvorrichtung über eine eigenständige Basis, so dass das dritte Stellsystem anhand der Daten der Zusatz-Erfassungsvorrichtung ansteuerbar ist. Die Zusatz-Erfassungsvorrichtung ist bevorzugt, verglichen mit der Erfassungsvorrichtung, weniger genau, weist aber ein größeres Sehfeld auf. Somit ist durch das dritte Regelsystem nur eine grobe Ausrichtung der Erfassungsvorrichtung auf das Ziel möglich. Die genaue Ausrichtung geschieht durch das erste Stellsystem und/oder das zweite Stellsystem.

Insbesondere liefert die Zusatz-Erfassungsvorrichtung Daten, die als Vorsteuerung für das zweite Stellsystem verwendbar sind. Dadurch wird die Performance des zweiten Stellsystems erhöht.

Es ist ebenso bevorzugt vorgesehen, nur die zuvor genannte Art der Ansteuerung für das zweite Stellsystem zu verwenden. Dies ist insbesondere bei der Zielerfassung sinnvoll, wenn das Zielobjekt aufgrund eines größeren Sehfelds bereits in der Zusatz-Erfassungsvorrichtung erscheint, aber noch nicht mit der Detektionsvorrichtung in der Sende-/Erfassungsvorrichtung beobachtet werden kann.

Die Erfindung wird nun anhand von Ausführungsbeispielen unter Berücksichtigung der beigefügten Zeichnungen näher beschrieben. In den Zeichnungen ist:

Fig. 1    eine schematische Darstellung eines Wirksystems gemäß einem Ausführungsbeispiel der Erfindung,

Fig. 2    eine schematische Darstellung eines Teilbereichs des Wirksystems gemäß dem bevorzugten Ausführungsbeispiel der Erfindung,

Fig. 3    eine erste schematische Darstellung des ersten Regelsystems des Wirksystems gemäß dem bevorzugten Ausführungsbeispiel der Erfindung,

Fig. 4    eine zweite schematische Darstellung des ersten Regelsystems des Wirksystems gemäß dem bevorzugten Ausführungsbeispiel der Erfindung,

Fig. 5    eine schematische Darstellung des ersten Regelsystems und des zweiten Regelsystems des Wirksystems gemäß dem bevorzugten Ausführungsbeispiel der Erfindung, und

Fig. 6    eine schematische Darstellung des ersten Regelsystems und des zweiten Regelsystems des Wirksystems gemäß dem bevorzugten Ausführungsbeispiel der Erfindung bei Verwendung der Information der Zusatz-Erfassungsvorrichtung zur Ansteuerung des zweiten Stellsystems.

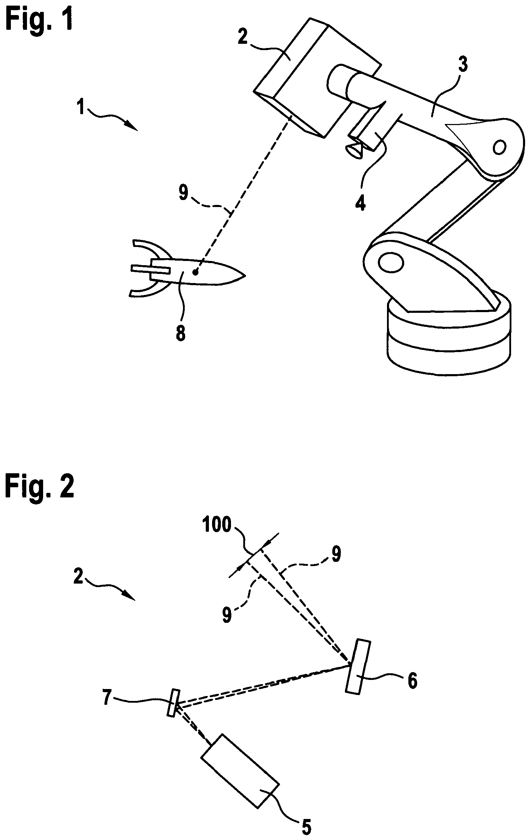

Figur 1 zeigt das Wirksystem 1 gemäß einem bevorzugten Ausführungsbeispiel der Erfindung. Zusätzlich zeigt Figur 1 einen Flugkörper als Zielobjekt 8. Um das Zielobjekt 8 erfassen und verfolgen zu können, ist eine Sende-/Erfassungsvorrichtung 2 vorhanden, die auf einem dritten Stellsystem 3 montiert ist. Die Sende-/Erfassungsvorrichtung 2 umfasst zusätzlich ein erstes Stellsystem 7 und ein zweites Stellsystem 6 (vgl. Fig. 2), die zum Ablenken eines Strahlengangs 9 dienen.

Der Strahlengang 9 erstreckt sich von der Sende-/Erfassungsvorrichtung 2 zu dem Zielobjekt 8. Bei einer Bewegung des Zielobjekts 8 muss der Strahlengang 9 daher entsprechend nachgeführt werden. Dies geschieht durch ein mehrstufiges System.

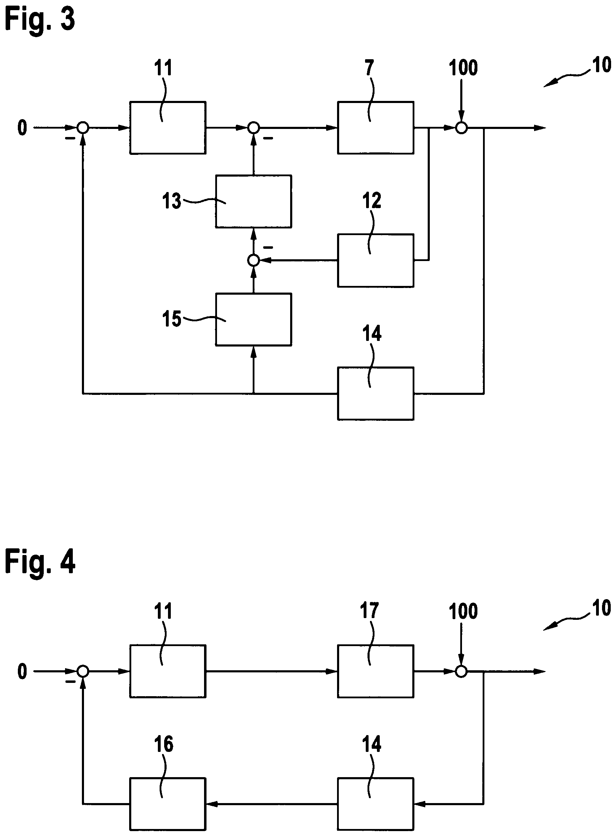

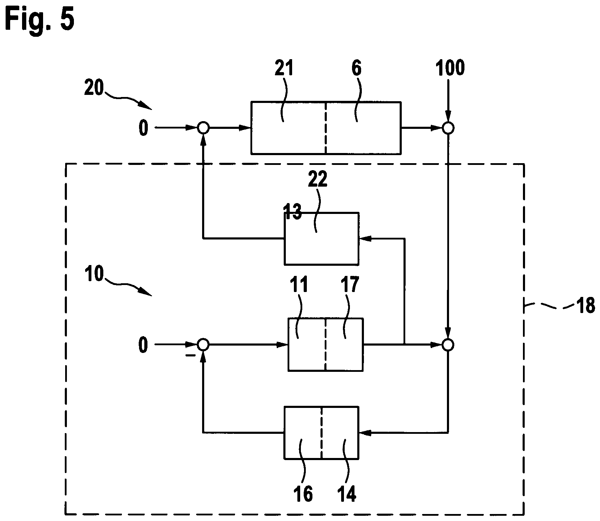

Eine Feineinstellung und eine Mitteleinstellung sind jeweils in Figur 2 gezeigt. Eine Beleuchtungsvorrichtung 5 sendet einen Laserstrahl entlang des Strahlengangs 9 aus, wobei der Strahlengang 9 von dem ersten Stellsystem 7 und dem zweiten Stellsystem 6 ablenkbar ist. Das erste Stellsystem 7 ist von einem ersten Regelsystem 10 (vgl. Fig. 3) und das zweite Stellsystem 6 von einem zweiten Regelsystem 20 (vgl. Fig. 5) ansteuerbar. Reflektiertes Licht ist von einer Detektionsvorrichtung 14 (vgl. Fig. 3) detektierbar. Die Detektionsvorrichtung ist insbesondere in die Beleuchtungsvorrichtung 5 integriert.

Das erste Stellsystem 7 ist sehr performant, wobei keine große Auslenkbarkeit gegeben sein muss. Insbesondere hat das erste Stellsystem 7 einen maximalen Stellbereich von einem Millirad. Daher ist das erste Stellsystem 7 bevorzugt ein Piezo-Aktor. Der Piezo-Aktor steuert insbesondere einen ersten Spiegel an, der eine Richtung des Strahlengangs 9 verändert. Sollte sich das Zielobjekt 8 relativ zu der Sende-/Erfassungsvorrichtung 2 bewegen, so kann das erste Stellsystem 7 diese Bewegung nachverfolgen, indem der Strahlengang 9 entsprechend abgelenkt wird. Damit ist ein stetiges Erfassen und Verfolgen des Zielobjekts 8 möglich. Dies wird nachfolgend ausführlich beschrieben:

Sollte sich eine Abweichung 100 des Zielobjekts 8 zu einem Referenzpunkt ergeben, so muss diese Abweichung 100 auch in den Strahlengang 9 eingebracht werden, was mit dem ersten Stellsystem 7 geschieht. Das Einbringen einer Änderung in den Strahlengang 9 führt somit zu einer Auslenkung des ersten Stellsystems 7. Das zweite Regelsystem 20 ist daher eingerichtet, durch das zweite Stellsystem 6 das erste Stellsystem 7 wieder in die Nulllage zu überführen. Da hierfür eine geringere Performance notwendig ist, sind die Anforderungen an das zweite Stellsystem 6 geringer. Jedoch benötigt das zweite Stellsystem 6 vorteilhafterweise eine größere Auslenkbarkeit als das erste Stellsystem 7. Daher ist das zweite Stellsystem 6 insbesondere ein durch Schwingspulen in Tip-Tilt-Richtung beweglicher Spiegel. Dieser zweite Spiegel lenkt ebenso wie der zuvor genannte erste Spiegel den Strahlengang 9 ab. Insbesondere findet die Ablenkung durch den zweiten Spiegel nach der Ablenkung durch den ersten Spiegel statt.

Das zweite Stellsystem 6 wird von dem zweiten Regelsystem 20 derart angesteuert, dass eine Auslenkung des ersten Stellsystems 7 rückgängig gemacht wird und das erste Stellsystem 7 wieder in die Nulllage geführt wird. Das zweite Stellsystem 7 erhöht daher den Bereich, der mit der Sende-/Erfassungsvorrichtung 2 abgedeckt werden kann, indem die Nulllage des ersten Stellsystems 7 verschoben wird. Dabei ist es der Sende-/Erfassungsvorrichtung 2 dennoch möglich, die Performance des ersten Stellsystems 7 zum Verfolgen des Zielobjekts 8, d.h. zum Beibehalten des Referenzpunktes, zu verwenden.

Es ist daher mit der Sende-/Erfassungsvorrichtung 2 möglich, das Zielobjekt 8 in zwei Stufen zu verfolgen. Kleine Bewegungen oder Bewegungsänderungen des Zielobjekts 8, die insbesondre abrupt ausgeführt werden, sind durch Ablenkung des Strahlengangs 9 mit dem ersten Stellsystems 7 möglich. Das erste Stellsystem 7 fungiert daher als Feinrichtsystem. Um auch größere Bewegungen oder Bewegungsänderungen des Zielobjekts 8 verfolgen zu können, führt das zweite Stellsystem 6 das erste Stellsystem nach einer Auslenkung in die Nulllage zurück. Das zweite Stellsystem 6 ist daher ein Mittelrichtsystem.

In den Figuren 1 und 2 sind das erste Stellsystem 7 und das zweite Stellsystem 6 als Teileinheit der Sende-/Erfassungsvorrichtung 2 gezeigt.

Figur 1 zeigt, dass die Sende-/Erfassungsvorrichtung 2 auf dem dritten Stellsystem 3 montiert ist. Das dritte Stellsystem 3 dient als Grobrichtsystem und ist insbesondere ein Industrieroboter. Durch die Anordnung der Sende-/Erfassungsvorrichtung 2 auf dem dritten Stellsystem 3 kann die Sende-/Erfassungsvorrichtung 2 als gesamte Einheit bewegt werden, um so deren Wirkbereich weiter zu vergrößern. Bevorzugt weist das dritte Stellsystem 3 ausreichend Bewegungsfreiheitsgrade auf, um eine Ausrichtung der Sende-/Erfassungsvorrichtung 2 in Azimut und Elevation zu ermöglichen. Dazu ist das dritte Stellsystem 3 insbesondere ein zumindest zweiachsiger Industrieroboter.

Um das dritte Stellsystem 3 unabhängig von dem ersten Stellsystem 7 und dem zweiten Stellsystem 6 zu betreiben, wird ein das dritte Stellsystem 3 ansteuerndes drittes Regelsystem unabhängig von dem ersten Regelsystem 10 und dem zweiten Regelsystem 20 betrieben. Daher ist bevorzugt eine Zusatz-Erfassungsvorrichtung 4 vorhanden, die bevorzugt direkt an dem dritten Stellsystem 3 angeordnet ist. Die Zusatz-Erfassungsvorrichtung 4 dient zum Erfassen des Zielobjekts 8, wobei die Genauigkeit der Zusatz-Erfassungsvorrichtung 4 geringer als die der Sende-/Erfassungsvorrichtung 2 ist. Insbesondere erkennt die Zusatz-Erfassungsvorrichtung lediglich die groben Umrisse und/oder weitere charakteristische Merkmale des Zielobjekts 8, so dass das dritte Stellsystem 3 die Sende-/Erfassungsvorrichtung 2 auf das Zielobjekt 8 ausrichtet. Die genaue Erfassung und Verfolgung des Zielobjekts 8 ist anschließend mittels des ersten Stellsystems 7 und des zweiten Stellsystems 6 möglich.

Durch das Verwenden des dritten Stellsystems 3 wird der Erfassungsbereich der Sende-/Erfassungsvorrichtung 2 vergrößert.

Eine schematische Zeichnung des ersten Regelsystems 10 ist in den Figuren 3 und 4 gezeigt. Figur 3 zeigt den Aufbau des ersten Regelsystems 10 gemäß dem bevorzugten Ausführungsbeispiel. So umfasst das erste Regelsystem 10 einen ersten Regler 11, der insbesondere als PID-Regler ausgeführt ist. Der erste Regler 11 leitet sein Ausgangssignal an das erste Stellsystem 7 weiter. Die Auslenkung des ersten Stellsystems 7 ist mittels einer Messvorrichtung 12 bestimmbar, so dass das Ergebnis dieser Messung an einen Filter 13 übergeben wird. Der Filter 13 wiederum steuert neben dem ersten Regler 11 die Stellvorrichtung 7 an, um so eine präzise Auslenkung des ersten Stellsystems 7 zu erzeugen.

Da sich jedoch durch die Bewegung des Zielobjekts 8 eine Abweichung 100 des Zielobjekts 8 von einem Referenzpunkt ergeben kann, wirkt sich diese Abweichung 100 auch auf das erste Regelsystem 10 aus. Durch die Detektionsvorrichtung 14 wird diese Abweichung 100 des Zielobjekts 8 erkannt und, nach Beaufschlagung mit einem Proportionalitätsfaktor 15, ebenfalls an den Filter 13 übergeben. Zusätzlich wird die Abweichung 100 von der Detektionsvorrichtung 14 direkt an den ersten Regler 11 geleitet. Auf diese Weise ist ein rückgekoppeltes System vorhanden, das ein ständiges Erfassen und Verfolgen des Zielobjekts 8 erlaubt.

Als Führungsgröße für den ersten Regler 11 wird der Wert 0 angenommen, was bedeutet, dass keine Abweichung 100 zwischen dem Zielobjekt und dem Referenzpunkt vorhanden sein soll. Daher wird die Abweichung 100 durch die Detektionsvorrichtung bestimmt und von der Führungsgröße abgezogen, um das Ergebnis an den ersten Regler 11 zu leiten. Dieser regelt daher die Abweichung 100 aus, indem er das erste Stellsystem 7 entsprechend ansteuert.

Das Ansteuersignal des Stellsystems 7 besteht, wie zuvor beschrieben, aus einem Signal des ersten Reglers 11 und aus einem Signal des Filters 13. Zum Koppeln dieser Signale wird das Signal des Filters 13 von dem Signal des ersten Reglers subtrahiert. Das Eingangssignal des Filters 13 wiederum besteht, wie oben beschrieben, aus einem Signal von der Detektionsvorrichtung 14 und einem Signal der Messvorrichtung 12, wobei das Signal der Messvorrichtung 12 von dem Signal der Detektionsvorrichtung subtrahiert wird.

Der Übersicht halber ist das erste Regelsystem 10 in Figur 4 vereinfacht dargestellt. Dazu sind Übertragungsfunktionen des ersten Reglers 11, des Filters 13 und des Proportionalitätsfaktors 15 in einem ersten Vereinfachungsglied 16 zusammengefasst. Ebenso sind Übertragungsfunktionen des ersten Stellsystems 7, des Filters 13 und der Messvorrichtung 12 in einem zweiten Vereinfachungsglied 17 zusammengefasst. Das Zusammenfassen von Übertragungsfunktionen diverser Komponenten ist aus dem Stand der Technik hinlänglich bekannt. Daher ergeben sich die folgenden Zusammenhänge:

$$G_7 = \frac{G_2}{1 - G_2 \cdot G_3 \cdot G_4} \qquad G_8 = 1 + \frac{G_3 \cdot G_5}{G_1}$$

G1     Übertragungsfunktion des ersten Reglers 11
G2     Übertragungsfunktion des ersten Stellsystems 7
G3     Übertragungsfunktion des Filters 13
G4     Übertragungsfunktion der Messvorrichtung 12
G5     Proportionalitätsfaktor 15
G6     Übertragungsfunktion der Detektionsvorrichtung 14
G7     Übertragungsfunktion des zweiten Vereinfachungsglieds 17
G8     Übertragungsfunktion des ersten Vereinfachungsglieds 16

Figur 5 zeigt die Kombination des ersten Regelsystems 10 mit dem zweiten Regelsystem 20. Dabei umfasst das erste Regelsystem 10 die in Figur 4 gezeigten vereinfachten Komponenten. Das zweite Regelsystem 20 umfasst einen zweiten Regler 21, der ebenfalls bevorzugt ein PID-Regler ist. Der zweite Regler 21 verwendet den Ausgang des zweiten Vereinfachungsglieds 17 (das die Messvorrichtung 12 umfasst), um das zweite Stellsystem 6 anzusteuern. Dazu wird das Signal des zweiten Vereinfachungsglieds 17 durch einen Proportionalitätsfaktor 22 verstärkt. Auch hier wird als Führungsgröße der konstante Wert 0 angenommen, was bedeutet, dass die gemessene Auslenkung des ersten Stellsystems 7 zu null werden soll. Daher wird das Ausgangssignal des Proportionalitätsfaktors auf die Führungsgröße aufaddiert, um diese Summe anschließend an den zweiten Regler 21 zu übertragen.

Es ist ersichtlich, dass der genannte Aufbau das erste Regelsystem 10 und das zweite Regelsystem 20 koppelt, indem die Regelschleife des zweiten Regelsystems 20 durch das erste Regelsystem 10 geschlossen ist und das zweite Stellsystem 6 auf Basis der Auslenkung des ersten Stellsystems 7 angesteuert wird. Die Sende-/Erfassungseinheit 2 profitiert somit von der Performanz des ersten Regelsystems 10 bzw. des ersten Stellsystems 7 genauso wie von dem großen Erfassungsbereich des zweiten Stellsystems 6.

Wegen der Kopplung wirkt die Abweichung 100 nicht mehr direkt auf den Ausgang des zweiten Vereinfachungsglieds 17, sondern auf den Ausgang des zweiten Stellsystems 6. Dies kann bereits aus dem in Figur 2 gezeigten Aufbau der Sende-/Erfassungsvorrichtung 2 ersehen werden, da das von dem Zielobjekt 8 reflektierte Licht beim Folgen des Strahlengangs 9 zunächst auf das zweite Stellsystem 6 und erst danach auf das erste Stellsystem 7 (im Vereinfachungsglied 17 enthalten) trifft. Es wird daher nicht mehr auf den Ausgang des zweiten Vereinfachungsglied 17 die Abweichung 100 aufaddiert, sondern es werden zunächst die Abweichung 100 mit dem Ausgangssignal des zweiten Stellsystems 6 addiert, bevor diese summierte Signal auf das Ausgangssignal des zweiten Vereinfachungsglieds 17 aufsummiert wird.

Ebenso wie hier für die Kopplung des zweiten Regelsystems 20 an das erste Regelsystem 10 beschrieben, kann auch das dritte Regelsystem 30 an das zweite Regelsystem 20 gekoppelt werden. In einem derartigen alternativen Ausführungsbeispiel wird der Industrieroboter verwendet, um das Mittelrichtsystem in die Nulllage zurückzufahren.

Alternativ zur zuvor genannten Kopplung wird in diesem Ausführungsbeispiel für die Regelung des dritten Stellsystems die Zusatz-Erfassungsvorrichtung 4 verwendet. Dies ist insbesondere dann sinnvoll, wenn das Ziel, insbesondere aufgrund eines kleineren Sehfelds, noch nicht mit der Sende-/Erfassungsvorrichtung 2 erfasst werden kann und somit nur aufgrund der Informationen aus der Zusatz-Erfassungsvorrichtung ausgerichtet werden kann. Wie bereits oben beschrieben erlaubt das Stellsystem 3 die Zielverfolgung im Großwinkelbereich. Die Informationen der Zusatz-Erfassungsvorrichtung 4 können des weiteren als Vorsteuerung für das zweite Stellsystem 6 verwendet werden.

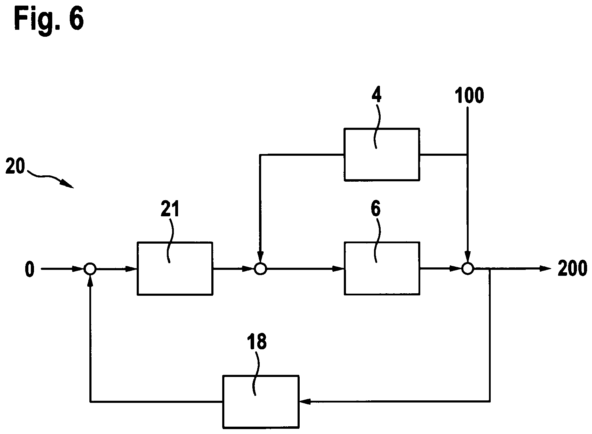

Dieser Fall ist in Figur 6 gezeigt. Dazu wird ein drittes Vereinfachungsglied 18 verwendet, das in Figur 5 definiert ist. Das dritte Vereinfachungsglied 18 umfasst die Übertragungsfunktionen des ersten Vereinfachungsglieds 16, des zweiten Vereinfachungsglieds 17, des ersten Reglers 11, der Detektionsvorrichtung 14 sowie des Proportionalitätsfaktor 22. Die Signale der Zusatz-Erfassungsvorrichtung 4 werden in ein Stellsignal umgerechnet und an das zweite Stellsystem 6 übertragen. Somit steuert die Zusatz-Erfassungsvorrichtung 4 neben dem zweiten Regler 21 das zweite Stellsystem 6 an, indem das Ausgangssignal der Zusatz-Erfassungsvorrichtung 4 vom Ausgangssignal des zweiten Reglers 21 subtrahiert wird.

Es ist auch möglich ausschließlich diese Art der Ansteuerung für das zweite Stellsystem 6 zu verwenden und das Ausgangssignal des zweiten Reglers 21 bei der Ansteuerung des zweiten Stellsystems 6 nicht zu berücksichtigen. Dies ist insbesondere bei einem Aufschaltvorgang sinnvoll, bei dem das Ziel aufgrund des größeren Sehfelds bereits in der Zusatz-Erfassungsvorrichtung 4 zu sehen ist, aber noch nicht in der Sende-/Erfassungsvorrichtung 2.

Insgesamt ergibt sich für das erste Regelsystem 10 und das zweite Regelsystem 20 eine Übertragungsfunktion mit dem Eingang "Abweichung 100" und einem Ausgang 200 die folgende gesamte Übertragungsfunktion $G_{gesamt}$.

$$G_{gesamt} = \frac{1 - G_{11}G_{12}}{1 - G_{10}G_{12}G_{13}} \qquad G_{10} = -\frac{G_9 \cdot G_1 \cdot G_6 \cdot G_7 \cdot G_8}{1 + G_1 \cdot G_6 \cdot G_7 \cdot G_8}$$

G9 Proportionalitätsfaktor 22
G10 Übertragungsfunktion des dritten Vereinfachungsglieds 18
G11 Übertragungsfunktion der Zusatz-Erfassungsvorrichtung 4 und eines zugehörigen Filters zur Signalaufbereitung
G12 Übertragungsfunktion der zweiten Stellvorrichtung 6
G13 Übertragungsfunktion des zweiten Reglers 21

Bezugszeichenliste

1 Wirksystem
2 Sende-/Erfassungsvorrichtung
3 Drittes Stellsystem
4 Zusatz-Erfassungsvorrichtung
5 Beleuchtungsvorrichtung
6 Zweites Stellsystem
7 Erstes Stellsystem
8 Zielobjekt
9 Strahlengang

10 Erstes Regelsystem
11 Erster Regler
12 Messvorrichtung
13 Filter
14 Detektionsvorrichtung
15 Proportionalitätsfaktor
16 Erstes Vereinfachungsglied
17 Zweites Vereinfachungsglied
18 Drittes Vereinfachungsglied

20 zweite Regelvorrichtung
21 zweiter Regler
22 Proportionalitätsfaktor

100 Abweichung
200 Ausgang

**Patentansprüche**

1. Wirksystem (1), umfassend

   - zumindest eine Sende-/Erfassungsvorrichtung (2), mit einer Detektionsvorrichtung (14) zur Erfassung eines Zielobjekts (8),
   - wobei die Sende-/Erfassungsvorrichtung (2) eine Laserquelle und eine Kamera umfasst,
   - zumindest ein erstes Regelsystem (10) zum Ansteuern eines ersten Stellsystems (7) zum Ausrichten eines Strahlengangs (9) zwischen Sende-/Erfassungsvorrichtung (2) und Zielobjekt (8),
   - ein zweites Regelsystem (20) zum Ansteuern eines zweiten Stellsystems (6) zum Ausrichten des Strahlengangs (9), und
   - ein drittes Regelsystem zum Ansteuern eines dritten Stellsystems (3) zum Ausrichten der Sende-/Erfassungsvorrichtung (2), wobei
   - das dritte Regelsystem eine Zusatz-Erfassungsvorrichtung (4) umfasst und das dritte Stellsystem (3) auf Basis der Daten der Zusatz-Erfassungsvorrichtung (4) ansteuerbar ist,

   wobei:

   i) das erste Regelsystem (10) und das zweite Regelsystem (20) gekoppelt ausgelegt sind, und wobei das erste Stellsystem (7) eine Nulllage aufweist und das zweite Regelsystem (6) eingerichtet ist, das erste Stellsystem (7) durch Ansteuern des zweiten Stellsystem (6) in die Nulllage zu überführen und/oder in der Nulllage zu halten, oder
   ii) das zweite Regelsystem (20) und das dritte Regelsystem gekoppelt betrieben werden können, indem das zweite Stellsystem (6) eine Nulllage aufweist und das dritte Regelsystem eingerichtet ist, das zweite Stellsystem (6) durch Ansteuern des dritten Stellsystems (3) in die Nulllage zu überführen und/oder in der Nulllage zu halten.

2. Wirksystem (1) nach Anspruch 1, **dadurch gekennzeichnet, dass** die Sende-/Erfassungsvorrichtung (2) eine optische Sende-/Erfassungsvorrichtung ist.

3. Wirksystem (1) nach einem der vorhergehenden Ansprüche, **dadurch gekennzeichnet, dass** die Sende-/Erfassungsvorrichtung (2) eine Einwirkvorrichtung (5) umfasst.

4. Wirksystem (1) nach einem der vorhergehenden Ansprüche, **dadurch gekennzeichnet, dass** das erste Stellsystem (7) ein Piezo-Aktor ist.

5. Wirksystem (1) nach einem der vorhergehenden Ansprüche, **dadurch gekennzeichnet, dass** das zweite Stellsystem (6) eine Schwingspuleneinheit ist.

6. Wirksystem (1) nach einem der vorhergehenden Ansprüche, **dadurch gekennzeichnet, dass** das dritte Stellsystem (3) ein Industrieroboter ist.

7. Wirksystem (1) nach einem der vorhergehenden Ansprüche, **dadurch gekennzeichnet, dass** das erste Regelsystem (10) das erste Stellsystem (7) auf Basis der Daten der Sende-/Erfassungsvorrichtung (2) ansteuert.

8. Wirksystem (1) nach einem der vorhergehenden Ansprüche, **dadurch gekennzeichnet, dass** das zweite Stellsystem (6) auf Basis der Daten der Zusatz-Erfassungsvorrichtung (4) ansteuerbar ist.


**Claims**

1. Active system (1), comprising

    - at least one transmitting/capturing device (2), having a detecting device (14) for capturing a target object (8),
    - wherein the transmitting/capturing device (2) comprises a laser source and a camera,
    - at least one first control system (10) for controlling a first positioning system (7) for aligning a beam path (9) between the transmitting/capturing device (2) and the target object (8),
    - a second control system (20) for controlling a second positioning system (6) for aligning the beam path (9), and
    - a third control system for controlling a third positioning system (3) for aligning the transmitting/capturing device (2), wherein
    - the third control system comprises an additional capturing device (4) and the third positioning system (3) can be controlled on the basis of the data of the additional capturing device (4),

    wherein:

    i) the first control system (10) and the second control system (20) are configured in a coupled manner, and wherein the first positioning system (7) comprises a zero position and the second control system (**20**) is configured so as to transfer the first positioning system (7) into the zero position by means of controlling the second positioning system (6), and/or to hold said first positioning system in the zero position, or

    ii) the second control system (20) and the third control system can be operated in a coupled manner in that the second positioning system (6) comprises a zero position and the third control system is configured so as to transfer the second positioning system (6) into the zero position by means of controlling the third positioning system (3), and/or to hold said second positioning system in the zero position.

2. Active system (1) according to claim 1, **characterised in that** the transmitting/capturing device (2) is an optical transmitting/capturing device.

3. Active system (1) according to any one of the preceding claims, **characterised in that** the transmitting/capturing device (2) comprises an acting device (5)

4. Active system (1) according to any one of the preceding claims, **characterised in that** the first positioning system (7) is a piezoelectric actuator.

5. Active system (1) according to any one of the preceding claims, **characterised in that** the second positioning system (6) is a moving coil unit.

6. Active system (1) according to any one of the preceding claims, **characterised in that** the third positioning system (3) is an industrial robot.

**7.** Active system (1) according to any one of the preceding claims, **characterised in that** the first control system (10) controls the first positioning system (7) on the basis of data from the transmitting/capturing device (2).

**8.** Active system (1) according to any one of the preceding claims, **characterised in that** the second positioning system (6) can be controlled on the basis of the data of the additional capturing device (4).

**Revendications**

**1.** Système actif (1), comprenant :

- au moins un dispositif de transmission/de détection (2), comprenant un dispositif de détection (14) destiné à détecter un objet cible (8),
- dans lequel le dispositif de transmission/de détection (2) comprend une source laser et une caméra,
- au moins un système de régulation (10) destiné à piloter un premier système de réglage (7) pour orienter une trajectoire du faisceau (9) entre le dispositif de transmission/de détection (2) et l'objet cible (8),
- un deuxième système de régulation (20) destiné à piloter un deuxième système de réglage (6) pour orienter la trajectoire du faisceau (9), et
- un troisième système de régulation destiné à piloter un troisième système de réglage (3) pour orienter le dispositif de transmission/de détection (2), dans lequel
- le troisième système de régulation comprend un dispositif de détection complémentaire (4) et dans lequel le troisième système de réglage (3) est pilotable sur la base des données du dispositif de détection complémentaire (4),

dans lequel :

i) le premier système de régulation (10) et le deuxième système de régulation (20) sont conçus de manière couplée, et dans lequel le premier système de réglage (7) présente une position zéro et dans lequel le deuxième système de régulation (**20**) est adapté pour faire passer le premier système de réglage (7) en position zéro par pilotage du deuxième système de réglage (6) et/ou pour le maintenir dans la position zéro, ou

ii) dans lequel le deuxième système de régulation (20) et le troisième système de régulation peuvent fonctionner de manière couplée du fait que le deuxième système de réglage (6) présente une position zéro, et dans lequel le troisième système de régulation est adapté pour faire passer le deuxième système de réglage (6) en position zéro par pilotage du troisième système de réglage (3) et/ou pour le maintenir dans la position zéro.

**2.** Système actif (1) selon la revendication 1, **caractérisé en ce que** le dispositif de transmission/de détection (2) est un dispositif optique de transmission/de détection.

**3.** Système actif (1) selon l'une quelconque des revendications précédentes, **caractérisé en ce que** le dispositif de transmission/de détection (2) comprend un dispositif actif (5).

**4.** Système actif (1) selon l'une quelconque des revendications précédentes, **caractérisé en ce que** le premier système de réglage (7) est un actionneur piézoélectrique.

**5.** Système actif (1) selon l'une quelconque des revendications précédentes, **caractérisé en ce que** le deuxième système de réglage (6) est une unité à bobine mobile.

**6.** Système actif (1) selon l'une quelconque des revendications précédentes, **caractérisé en ce que** le troisième système de réglage (3) est un robot industriel.

**7.** Système actif (1) selon l'une quelconque des revendications précédentes, **caractérisé en ce que** le premier système de régulation (10) pilote le premier système de réglage (7) sur la base des données du dispositif de transmission/de détection (2).

**8.** Système actif (1) selon l'une quelconque des revendications précédentes, **caractérisé en ce que** le deuxième système de réglage (6) est pilotable sur la base des données du dispositif de détection complémentaire (4) .

**Fig. 1**

**Fig. 2**

# Fig. 3

# Fig. 4

# Fig. 5

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4122623 A1
- US 7171126 B2
- GB 2252398 A
- US 020050069325 A1
- US 020020080455 A1